# FASCICULE DE BREVET EUROPEEN

(11) **EP 2 452 082 B1**
(45) Date de publication et mention de la délivrance du brevet: **07.01.2015**
(21) Numéro de dépôt: 10742190.1
(22) Date de dépôt: 05.07.2010
(51) Int. Cl.: F16B 4/00, F16B 39/00

(54) **PROCEDE DE FREINAGE D'UN ECROU EN MATERIAU A FAIBLE CAPACITE DE DEFORMATION PLASTIQUE**
VERFAHREN ZUR SICHERUNG EINER MUTTER AUS EINEM MATERIAL MIT GERINGER PLASTISCHER VERFORMUNGSKAPAZITÄT
METHOD FOR LOCKING A NUT MADE OF A MATERIAL HAVING A LOW CAPABILITY OF PLASTICALLY DEFORMING

(30) Priorité: 06.07.2009 FR 0954660
(43) Date de publication de la demande: 16.05.2012
(73) Titulaire: Lisi Aerospace, 75012 Paris (FR)
(72) Inventeur: FAUCHET, Christian, F-95810 Grisy Les Platres (FR); BOURGES, Laurent, 95430 Auvers-sur-Oise (FR)
(74) Mandataire: Chauveau, Ariane Cécile Marie
(86) Numéro de dépôt international: PCT/FR2010/051405
(87) Numéro de publication internationale: WO 2011/004104

(56) Documents cités:
- GB-A- 1 227 097
- US-A- 3 718 957
- US-A- 3 925 876

## Description

La présente invention se rapporte à un procédé de freinage par déformation d'un écrou réalisé dans un matériau à faible capacité de déformation plastique. Le domaine technique de l'invention est, d'une façon générale, celui des écrous. Plus particulièrement, l'invention concerne les écrous fabriqués en une matière à haute résistance mécanique dont la capacité de déformation plastique est corrélativement faible, telle que par exemple les alliages de nickel, de titane ou de cobalt.

Pour une bonne compréhension de ce qui suit, il est utile de préciser qu'une opération de freinage d'un écrou consiste à créer, entre le filetage intérieur de l'écrou et le filetage extérieur d'une vis associée, un couple de frottement suffisamment élevé pour éviter tout dévissage intempestif de l'écrou en service, notamment sous l'effet des vibrations. Le couple de frottement ne doit pas pour autant rendre excessivement difficile ou aléatoire le vissage initial de l'écrou au montage.

Dans l'état de la technique, on connaît notamment l'enseignement du document FR 1 155 186, qui divulgue une méthode de freinage d'écrous usuels par une déformation radiale d'au moins deux faces du corps de l'écrou au moyen d'au moins deux pions de compression. Dans les applications les plus courantes, les écrous usuels sont réalisés dans des aciers faiblement alliés, matériaux qui supportent sans difficulté une telle déformation.

Mais ce procédé se révèle inadéquat et problématique pour freiner des écrous réalisés dans des alliages spéciaux à haute résistance tels que ceux utilisés en construction aéronautique. En effet, ces matériaux ont une plus faible capacité de déformation plastique que les aciers faiblement alliés. Des microfissures peuvent apparaître de part et d'autre des faces déformées et dégrader de façon significative la résistance mécanique statique et la résistance à la fatigue mécanique de l'écrou. De plus, en raison de cette faible capacité de déformation plastique, la déformation permanente, nécessaire au freinage, se produit brutalement et sans progressivité, de telle sorte qu'elle peut devenir tout de suite excessive et compromettre le montage convenable de l'écrou sur la vis.

De plus, la déformation plastique radiale du corps d'un écrou effectuée à température ambiante, selon les procédés usuels engendre un second problème. Ce dernier est lié au phénomène connu de retour élastique d'un matériau métallique, suite à une déformation plastique. En effet, lorsqu'on impose au corps d'un écrou une déformation radiale permanente, par exemple sous la forme d'une ovalisation, celle-ci ne persiste pas intégralement lorsque l'effort appliqué est relâché. Un retour élastique partiel se produit, tendant à ramener la forme ovale vers la forme circulaire initiale. Ce retour élastique est d'autant plus important que la limite d'élasticité du matériau de l'écrou est élevée. Il résulte de ce phénomène une grande variabilité de la déformation finale qui se traduit par une variabilité importante du couple de freinage obtenu, au point qu'il est souvent nécessaire de régler le niveau de déformation par essais successifs pour parvenir à ajuster le couple de freinage à l'intérieur d'une plage de tolérance mini/maxi définie par des spécifications techniques.

Il est connu du document GB1227097A de procéder à un chauffage local de l'écrou avant d'effectuer l'étape de déformation plastique. Il est en effet connu de l'homme du métier que le chauffage d'un métal diminue sa résistance élastique.

Cependant, le choix d'une température trop élevée de chauffage est susceptible de porter atteinte à la microstructure du matériau. La microstructure est définie par un ensemble de caractéristiques de la structure métallique du matériau telles que la taille des grains, leur morphologie et la proportion des différentes phases pour les alliages multiphasés. Cette microstructure conditionne en partie les propriétés physiques de l'écrou, telles que sa résistance mécanique.

Il serait donc avantageux de déterminer une température de chauffage permettant d'augmenter les capacités de déformation plastique du matériau constitutif de l'écrou, tout en conservant la résistance mécanique et/ou la microstructure dudit matériau.

La Demanderesse a constaté que, pour de nombreux alliages de titane, de nickel ou de cobalt, ainsi que pour des aciers à haute résistance à durcissement structural, l'intervalle plastique relatif représenté en fonction de la température présente une valeur maximale.

L'intervalle plastique relatif est défini par la formule (Rm - Re)/Rm, Rm étant la résistance mécanique à la rupture en traction et Re étant la limite élastique, ou résistance élastique, du matériau. Il s'exprime en pourcentage.

A température ambiante, par exemple entre 0 °C et 50 °C, des aciers faiblement alliés usuels, comme le SAE 4340, ont un intervalle plastique relatif avoisinant les 14%. Un tel intervalle plastique relatif autorise le freinage d'écrous à température ambiante, tel que décrit dans le document FR 1 155 186.

En revanche, la plupart des alliages à haute résistance utilisés en construction aéronautique ont un intervalle plastique relatif beaucoup plus faible à température ambiante. Cette caractéristique rend problématique le freinage des écrous constitués de ces alliages, en raison des problèmes décrits précédemment.

Lorsqu'on se place à une température optimale, correspondant au maximum de l'intervalle plastique relatif d'un alliage à haute résistance, il est possible d'exercer sur le matériau une contrainte comprise dans une fourchette large, sans retour élastique ni rupture du matériau. Le freinage à chaud est donc plus facilement et plus efficacement appliqué lorsque l'écrou est chauffé à cette température optimale, correspondant au matériau qui le constitue.

L'invention a donc pour objet un procédé de freinage d'un écrou présentant un filetage intérieur, dans lequel :
- on détermine une résistance mécanique à la rupture en traction (Rm) et une limite élastique (Re) du matériau constitutif de l'écrou en fonction de la température,
- on détermine une température optimale de chauffage pour laquelle est atteint un maximum d'un intervalle plastique relatif du matériau, ledit intervalle plastique relatif étant défini par la formule (Rm - Re) / Rm,
- on détermine une durée maximale de chauffage au-delà de laquelle l'écrou présente un risque de dégradation de sa microstructure et/ou de sa résistance mécanique initiale,
- on chauffe l'écrou à une température sensiblement égale à ladite température optimale et une durée de chauffage inférieure à ladite durée maximale, de sorte que la microstructure et la résistance mécanique initiales du matériau constitutif de l'écrou soient conservées,
- on déforme localement, par flexion, un corps de l'écrou.

Selon une forme préférentielle de l'invention, on chauffe l'écrou à une température comprise entre 80% et 120% de la température optimale, les températures étant exprimées en °C.

Selon une forme préférentielle de l'invention, on ne chauffe qu'une partie de l'écrou sur laquelle on applique la déformation, et non la totalité de l'écrou.

Selon une forme plus préférentielle de l'invention, on chauffe localement l'écrou avant de déformer localement, par flexion, sa paroi extérieure dans la zone où se situe le filetage intérieur, en appliquant un effort selon une direction diamétrale sur au moins deux faces du corps de l'écrou.

Selon une forme préférentielle de l'invention, le procédé ne comporte pas d'étape ultérieure de traitement thermique. Il est particulièrement avantageux d'effectuer la déformation de freinage sur l'écrou dans son état de traitement thermique final, car le couple de freinage ainsi obtenu ne peut pas se trouver modifié dans la suite du procédé. Dans l'état de la technique, il est en effet connu de déformer l'écrou dans un état recuit, un traitement thermique supplémentaire étant nécessaire pour amener le matériau au niveau de résistance mécanique requis. Ce traitement thermique provoque une libération des contraintes résiduelles induites par la déformation préalable de l'écrou. La libération des contraintes provoque une déformation, antagoniste à la déformation initiale, qui modifie fortement le couple de freinage mesuré initialement.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- Figure 1 : une représentation graphique de la variation de contrainte de traction portée en ordonnées, en fonction de la déformation par allongement portée en abscisses, pour différents niveaux de température de chauffage, ceci pour un exemple de matériau d'écrou donné.
- Figure 2 : une représentation graphique de la variation de résistance mécanique à la rupture en traction Rm et de résistance élastique Re, portées en ordonnée, en fonction de la température de chauffage portée en abscisse, ceci pour un premier exemple de matériau d'écrou.
- Figure 3 : une représentation graphique de la variation de la résistance mécanique à la rupture en traction Rm et de la résistance élastique Re, portées en ordonnée, en fonction de la température de chauffage portée en abscisse, ceci pour un deuxième exemple de matériau d'écrou.
- Figure 4 : une représentation graphique de la variation de la résistance mécanique à la rupture en traction Rm, de la résistance élastique Re et de l'intervalle plastique relatif, portés en ordonnée, en fonction de la température de chauffage portée en abscisse, ceci pour un troisième exemple de matériau.
- Figure 5 : une représentation graphique de la variation de la résistance mécanique à la rupture en traction Rm, de la résistance élastique Re et de l'intervalle plastique relatif, portées en ordonnée, en fonction de la température de chauffage portée en abscisse, ceci pour un quatrième exemple de matériau.
- Figure 6 : une représentation schématique d'une vue en perspective oblique d'un freinage d'un écrou par déformation, selon un mode de réalisation de l'invention.

Comme il est illustré dans le document FR 1 155 186 précédemment cité, le freinage par déformation radiale de la paroi d'un écrou consiste à déformer localement par compression au moins deux faces du corps dudit écrou. Le comportement à la déformation du matériau constitutif de l'écrou est directement reflété par ses caractéristiques mécaniques de résistance à la flexion. Il existe cependant des analogies entre le comportement en flexion des alliages de métaux et leur comportement en traction. Pour la plupart des alliages connus, la littérature scientifique est riche en données de résistance en traction, ce qui n'est pas le cas pour la résistance à la flexion. Dans tout ce qui suit, on fera donc référence aux caractéristiques de comportement en traction des matériaux.

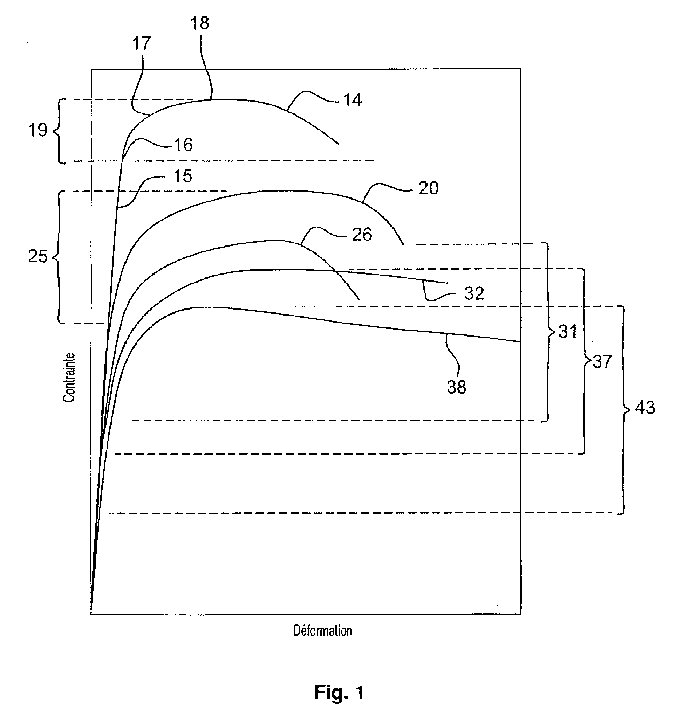

La figure 1 montre comment l'allure d'une courbe typique de traction d'un matériau métallique évolue en fonction de la température d'essai. Chaque courbe représente la variation de la contrainte de traction portée en ordonnée, en fonction de la déformation par allongement d'une éprouvette d'essai portée en abscisse, pour un niveau de température donné.

La courbe 14 correspond à un essai de traction effectué à température ambiante. On observe une partie rectiligne 15 partant de zéro et allant jusqu'à une contrainte 16 qui correspond à la résistance élastique, appelée aussi conventionnellement limite élastique et désignée Re. L'allongement correspondant figuré en abscisse est appelé allongement élastique, car dans cette partie rectiligne 15 de la courbe, la déformation par allongement revient à zéro si l'on relâche la contrainte de traction appliquée à l'éprouvette.

Lorsque la contrainte appliquée croît au-delà de la valeur 16, la courbe s'incurve de plus en plus selon la partie 17 jusqu'à ce que la contrainte atteigne une valeur maximum 18 dite résistance mécanique à la rupture en traction et désignée conventionnellement Rm. Dans cette partie curviligne 17, la déformation par allongement persiste lorsque l'on cesse d'appliquer une contrainte de traction à l'éprouvette. On observe alors un allongement permanent qui traduit une déformation plastique et non plus élastique comme c'était le cas tout au long de la partie rectiligne.

La contrainte de traction correspondant au maximum 18 correspond à la rupture de l'éprouvette.

La portion de courbe 17 comprise entre la limite élastique 16 et le maximum de résistance mécanique 18 représente la plage de plasticité 19. La différence entre la résistance mécanique et la limite élastique (Rm - Re) représente l'intervalle plastique. Pour imposer un changement de forme géométrique à une pièce réalisée en un matériau métallique, il faut exercer sur cette pièce un niveau de contrainte situé dans cet intervalle de plasticité.

Les courbes 20, 26, 32 et 38 correspondent à des essais de traction sur le même matériau, effectués à des températures croissantes, respectivement 190 °C, 360 °C, 470 °C et 520 °C. Les courbes 20, 26, 32 et 38 présentent chacune un intervalle plastique respectivement référencé 25, 31, 37 et 43. L'intervalle plastique est défini par la formule (Rm - Re), Rm étant la résistance mécanique à rupture en traction et Re étant la limite élastique.

L'ensemble des courbes 14, 20, 26, 32 et 38 montre que lorsque la température d'essai augmente, la résistance mécanique décroît, la limite élastique décroît encore plus rapidement, et par conséquent l'intervalle plastique augmente significativement.

On peut établir expérimentalement un faisceau de courbes analogues à celles de la figure 1 pour chaque alliage métallique dont on veut étudier le comportement en traction comparé à la température ambiante et à des températures d'essai croissantes.

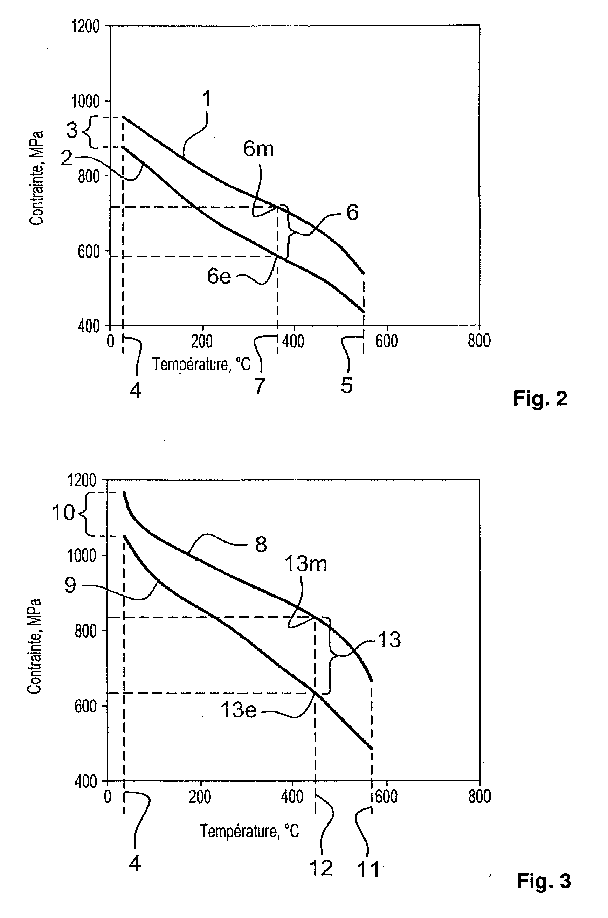

A partir d'un tel faisceau de courbes établi pour un alliage donné dans un état de traitement thermique donné, on peut déduire un graphique comme ceux de la figure 2 à la figure 5, qui fournissent une représentation synthétique de l'évolution de l'intervalle plastique en fonction de la température.

A partir de ces courbes, la Demanderesse a constaté que, pour de nombreux alliages de titane, de nickel ou de cobalt, ainsi que pour des aciers à haute résistance à durcissement structural, l'intervalle plastique relatif représenté en fonction de la température présente une valeur maximale.

L'intervalle plastique relatif est défini par la formule (Rm - Re)/Rm, Rm étant la résistance mécanique à la rupture en traction et Re étant la limite élastique du matériau.

Lorsqu'on se place à une température optimale, correspondant au maximum de l'intervalle plastique relatif, il est possible d'exercer sur le matériau une contrainte comprise dans une fourchette la plus large, sans retour élastique ni rupture. Le freinage à chaud est donc plus facilement et plus efficacement appliqué lorsque l'écrou est chauffé à cette température optimale.

Dans l'exemple selon la figure 2, le matériau constitutif de l'écrou est un alliage de titane largement utilisé dans l'industrie aéronautique, désigné Ti6Al4V selon la normalisation internationale. L'alliage en question est composé principalement de titane allié avec 6% d'aluminium et 4% de vanadium. Dans cet exemple, l'alliage Ti6Al4V constitutif de l'écrou se trouve à l'état recuit. Cet état correspond à un traitement thermique comportant un maintien à haute température suivi d'un refroidissement lent qui permet de conférer au matériau une résistance mécanique minimale et corrélativement une ductilité maximale pour cet alliage. Dans cet état recuit, l'alliage Ti6Al4V présente à température ambiante une résistance mécanique en traction de l'ordre de 950 MPa et une résistance élastique de l'ordre de 850 à 900 MPa. Néanmoins sa capacité de déformation plastique à température ambiante reste limitée.

Sur la figure 2, la courbe 1 représente la résistance mécanique en traction de l'alliage considéré, portée en ordonnée, en fonction de la température d'essai portée en abscisse. La courbe 2 représente la résistance élastique ou limite d'élasticité, en fonction de la température. A une température ambiante 4, par exemple comprise entre 0°C et 50°C, la distance 3 séparant la courbe 1 et la courbe 2 correspond à la différence entre la résistance mécanique et la résistance élastique du matériau constitutif de l'écrou, autrement dit à l'intervalle plastique dudit matériau. Dans cet exemple, l'intervalle plastique 3 est égal à : 950 - 880 = 70 MPa. L'intervalle plastique relatif est donc égal à 70/950 = 7,4 %.

Cette valeur de l'intervalle plastique relatif est très inférieure au ratio de 14 % que l'on observe pour les aciers faiblement alliés usuels.

D'après les courbes de la figure 2, on observe que l'intervalle plastique relatif est maximum à une température optimale 7, égale à 370°C. L'intervalle plastique 6 est égal à la différence entre la résistance mécanique 6m à 370°C et la limite d'élasticité 6e à 370°C, soit 720 - 590 = 130 MPa. L'intervalle plastique relatif à 370°C est donc 130/720 = 18 %. Cette valeur est nettement supérieure aux 7,4% correspondant à l'intervalle plastique relatif à la température ambiante 4.

La température optimale de chauffage déterminée ci-dessus est très inférieure aux températures élevées qu'il est d'usage d'atteindre pour la mise en forme des métaux par forgeage, lesquelles se situent au-delà de 900°C. Un chauffage à 370°C d'un écrou de Ti6Al4V recuit permet de conserver les caractéristiques physiques du matériau, telles que sa résistance mécanique et sa microstructure.

Selon l'invention, pour le chauffage avant déformation d'un écrou réalisé dans le matériau selon l'exemple ci-dessus, on ajuste la température sensiblement à la valeur optimale déterminée, soit 370°C. Plus préférentiellement, on applique une température comprise entre 80% et 120% de la valeur optimale calculée, soit entre 300°C et 440°C. Dans un exemple préféré, pendant le chauffage de l'écrou, on mesure sa température au moyen d'un pyromètre optique.

La durée de chauffage est choisie de manière à ce qu'elle ne présente aucun risque de modification durable de la résistance mécanique du matériau, comme cela se produit par exemple lors d'un traitement thermique de revenu. Elle dépend du matériau, de la masse de l'écrou ainsi que du moyen de chauffage.

Préférentiellement, la durée de chauffage est inférieure à une minute. Cette durée est généralement suffisante pour amener une partie de l'écrou à la température souhaitée. Par ailleurs, cette durée est largement inférieure aux durées de traitement thermique des alliages métalliques, généralement de l'ordre de plusieurs heures. Une durée de chauffage inférieure à une minute garantie qu'aucun changement structural n'intervient pendant la mise en oeuvre du procédé selon l'invention.

La figure 3 représente de façon graphique la variation de la résistance mécanique en traction et la variation de la limite élastique, portées en ordonnées, en fonction de la température d'essai portée en abscisses, pour un deuxième exemple de matériau utilisé pour la fabrication d'écrous. Il s'agit de l'alliage de titane Ti6Al4V ayant subi un traitement thermique spécifique, pour lui conférer une résistance mécanique de l'ordre de 1150 MPa à température ambiante. Le Ti6Al4V ayant subi un tel traitement est dit à l'état « trempé-vieilli ».

Pour expliquer ce choix de matériau, il faut préciser que les applications aéronautiques actuelles conduisent de plus en plus fréquemment à employer des matériaux présentant une résistance mécanique largement supérieure à 900 MPa à température ambiante. C'est le cas de nombreux aciers faiblement alliés usuels, dont la résistance mécanique dépasse 1100 MPa. Toutefois, ces aciers présentent une densité relativement élevée, ce qui va à l'encontre de la réduction de masse sur les avions.

De ce fait, dans leurs développements pour de nouveaux avions plus performants, les constructeurs recherchent des matériaux plus légers que les aciers faiblement alliés usuels, présentant cependant une résistance mécanique supérieure à 1100 MPa. Ainsi en est-il de l'alliage de titane Ti6Al4V précédemment cité, pour lequel de nombreux travaux ont été menés dans le but d'augmenter sa résistance mécanique, jusqu'alors limitée à 900 MPa à l'état recuit. Ces travaux ont abouti à la mise au point d'un traitement thermique particulier, consistant en une mise en solution aux environs de 930°C immédiatement suivie d'une trempe à l'eau, puis d'un traitement de durcissement par vieillissement dans une plage de température de 500°C à 550°C. Ce traitement confère à l'alliage Ti6Al4V une résistance mécanique en traction de l'ordre de 1150 MPa mais il s'accompagne d'une chute significative de ses caractéristiques de ductilité et de plasticité. Cet inconvénient constitue évidemment un obstacle majeur pour l'emploi de cet alliage dans certaines applications, et notamment pour la fabrication d'écrous freinés par déformation.

Selon la figure 3, la courbe 8 représente la variation de la résistance mécanique en traction Rm de l'alliage considéré Ti6Al4V à l'état trempévieilli, portée en ordonnée, en fonction de la température d'essai portée en abscisse. La courbe 9 représente la variation de la résistance élastique Re portée en ordonnée en fonction de la température portée en abscisse.

A la température ambiante 4, la distance 10 séparant la courbe 8 et la courbe 9 correspond à la différence entre la résistance mécanique et la résistance élastique, autrement dit à l'intervalle plastique de l'alliage considéré. Dans cet exemple l'intervalle plastique 10 est égal à: 1170 - 1030 = 140 MPa. L'intervalle plastique relatif est donc égal à : 140/1170 = 12%. Cette valeur est inférieure au ratio de 14 % que l'on observe pour les aciers faiblement alliés usuels.

D'après les courbes de la figure 3, on observe que l'intervalle plastique relatif est maximum à une température optimale 12 de 450°C. A cette température, la différence 13 entre la résistance mécanique 13m et la résistance élastique 13e est égale à: 825 - 630 = 195MPa. L'intervalle plastique relatif à 450°C est donc égal à : 195/825 = 23%, valeur très supérieure à la valeur de 12% que l'on observe à la température ambiante.

Selon l'invention, pour le chauffage avant déformation d'un écrou réalisé dans le matériau selon l'exemple ci-dessus, on ajuste la température sensiblement à la valeur optimale déterminée, soit 450°C. Plus préférentiellement, on applique une température comprise entre 80 % et 120 % de la valeur optimale calculée, soit entre 360°C et 540°C. Comme indiqué pour l'exemple de la figure 2, la durée de chauffage est préférentiellement choisie inférieure à 1 minute.

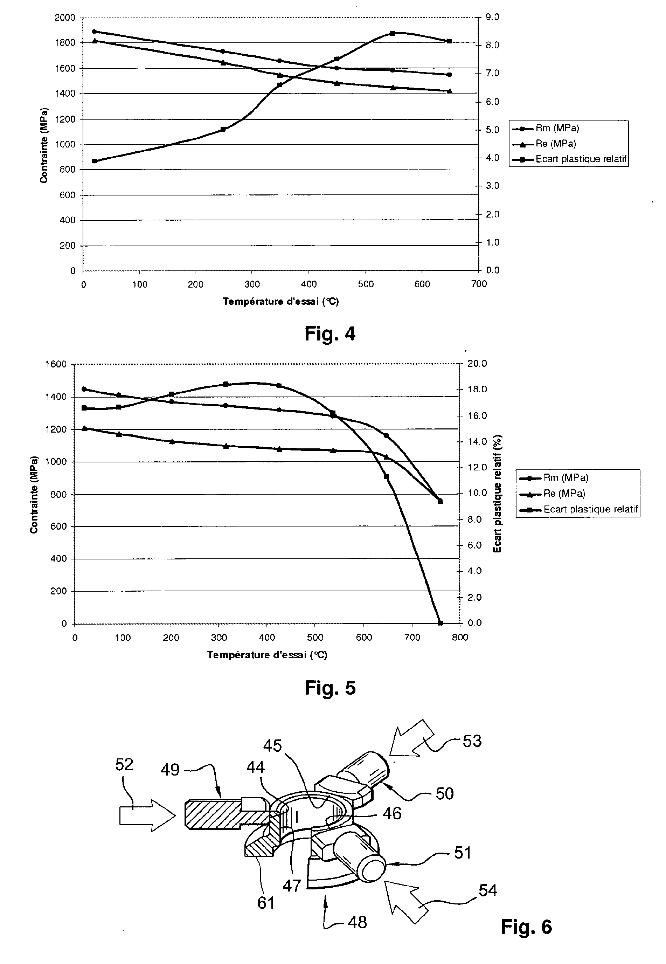

La Demanderesse a mis en évidence que le maximum présenté par l'intervalle plastique relatif existe pour différents matériaux dont la résistance mécanique à température ambiante est supérieure à 900 MPa. Ainsi la figure 4 représente de façon graphique la variation de la résistance mécanique en traction et la variation de la limite élastique, portées en ordonnée, en fonction de températures d'essai portées en abscisse, pour un troisième exemple de matériau. Il s'agit d'un alliage multi-phases de composition Co-Ni26Cr19Fe9Mo7 (connu sous l'appellation MP159^{®}) qui, à l'état écrouivieilli, présente une résistance mécanique supérieure à 1800 MPa à température ambiante.

Bien que cet alliage ne soit pas couramment utilisé pour fabriquer des écrous, on peut établir, de manière décrite ci-dessus, une température optimale de chauffage pour laquelle existe un intervalle plastique relatif optimal, supérieur à l'intervalle plastique mesuré à température ambiante.

A température ambiante, l'intervalle plastique de cet alliage est égal à: 1891 - 1817 = 73MPa. L'intervalle plastique relatif est donc égal à : 74/1891 = 4%

Dans l'exemple selon la figure 4, l'intervalle plastique est maximum à une température optimale de 550°C. L'intervalle plastique est égal à la différence entre la résistance mécanique à 550°C et la limite d'élasticité à 550°C soit 1579 - 1446 = 133MPa. L'intervalle plastique relatif à 550°C est donc 133/1579 = 8,4 % valeur très supérieure à l'intervalle plastique relatif à température ambiante de 4 % comme exposé précédemment.

Selon l'invention, pour le chauffage avant déformation d'un élément réalisé dans le matériau selon l'exemple ci-dessus, on ajuste la température sensiblement à la valeur optimale déterminée, soit 550°C. Plus préférentiellement, on applique une température comprise entre 440°C et 660°C. Pour un écrou usuel, une durée de chauffage inférieure à 1 minute est suffisante. Cette durée est très largement inférieure aux durées de chauffage utilisées pour les traitements thermiques de vieillissement pour ce matériau, de l'ordre de 4 heures.

Toujours dans l'esprit de montrer l'existence de cet intervalle plastique relatif, la figure 5 représente de façon graphique la variation de la résistance mécanique en traction et la variation de la limite élastique, portées en ordonnée, en fonction de températures d'essai portées en abscisse, pour un quatrième exemple de matériau. Il s'agit d'un alliage à base Nickel de composition Ni-Cr19Fe19Nb5Mo3 (connu sous l'appellation Inconel^{®} 718) qui, à l'état mis en solution-vieilli, présente une résistance mécanique de l'ordre de 1400 MPa à température ambiante.

Cet alliage utilisé pour la fabrication d'écrou n'est pas traditionnellement freiné à chaud, puisqu'il présente à la température ambiante un intervalle plastique supérieur à 14%. On peut néanmoins établir, de manière décrite ci-dessus, une température optimale de chauffage pour laquelle existe un intervalle plastique relatif maximal, supérieur à l'intervalle plastique mesuré à la température ambiante.

A température ambiante, l'intervalle plastique de cet alliage est égal à: 1448 - 1207 = 241 MPa. L'intervalle plastique relatif est donc égal à : 241/1448 = 16,6%

Dans l'exemple selon la figure 5, l'intervalle plastique est maximum à une température optimale de 316°C. L'intervalle plastique est égal à la différence entre la résistance mécanique à 316° et la limite d'élasticité à 316°C soit 1344 - 1096 = 248MPa. L'intervalle plastique relatif à 316°C est donc 248/1344 = 18,5 % valeur légèrement supérieure à l'intervalle plastique relatif à température ambiante de 16,6 % comme exposé précédemment.

Selon l'invention, pour le chauffage avant déformation d'un élément réalisé dans le matériau selon l'exemple ci-dessus, on ajuste la température sensiblement à la valeur optimale déterminée, soit 316°C. Plus préférentiellement, on applique une température comprise entre 250°C et 380°C. Pour un écrou usuel, une durée de chauffage inférieure à 1 minute est suffisante. Cette durée est très largement inférieure aux durées de chauffage utilisées pour les traitements thermiques de vieillissement pour ce matériau, de l'ordre de 16 heures.

Ainsi le procédé selon l'invention peut être appliqué à de nombreux matériaux connus comme étant difficiles à déformer plastiquement à température ambiante, dans leur état de traitement thermique final d'emploi. Le procédé est notamment applicable à la plupart des alliages de titane, de nickel, de cobalt, ou à certains aciers à haute résistance à durcissement structural.

Le procédé selon l'invention présente des avantages techniques et économiques indéniables. En effet, le choix judicieux de la température facilite le réglage précis de la déformation du corps de l'écrou, pour ajuster le couple de freinage à l'intérieur de la plage mini/maxi exigée par les spécifications techniques. Par ailleurs, l'augmentation de l'intervalle plastique relatif lié au chauffage permet d'effectuer la déformation de freinage sur l'écrou dans son état de traitement thermique final.

Pour mieux comprendre l'application du procédé, on se reporte utilement à la figure 6 qui représente de façon schématique une vue en perspective oblique d'un exemple non limitatif d'équipement utilisé pour déformer localement un écrou 48.

Cette déformation intervient notamment après avoir chauffé localement l'écrou, par exemple au moyen d'un inducteur en forme d'anneau relié à un générateur de chauffage par induction haute fréquence. Alternativement, le moyen de chauffage peut être de type laser. On vient chauffer une moitié haute de l'écrou 48 sur laquelle on veut appliquer la déformation de freinage, ladite partie haute étant opposée à une face 61 d'appui dudit écrou. Le moyen de chauffage est réglé de manière à obtenir les conditions de température optimales correspondant au matériau constitutif de l'écrou, déterminées comme dans les exemples correspondant aux figures 2 à 5. Comme indiqué précédemment, une durée de chauffage de l'ordre d'une minute est généralement suffisante pour amener la partie haute de l'écrou 48 à la température souhaitée.

Dans l'exemple selon la figure 6, on vient ensuite déformer localement trois points correspondant à trois faces équidistantes 44, 45 et 46 du corps 47 de l'écrou 48, de forme hexagonale adaptée à une clé de serrage, au moyen de trois pions de compression 49, 50 et 51, montés sur trois supports mobiles en translation selon trois axes positionnés sur un même plan et convergents suivant des angles de 120°.

Les pions de compression 49, 50 et 51 ont une forme adaptée à chaque type d'écrou, circulaire, ovale ou rectangulaire. Typiquement les empreintes formées par les pions 49, 50 et 51 n'affectent pas plus de la moitié de la hauteur des faces 47 de l'écrou 48 afin de ne pas déformer un nombre trop important de filets intérieurs (non représentés sur la figure 6). En effet, un nombre trop élevé de filets déformés pour obtenir le freinage empêcherait de visser l'écrou sur la vis associée.

Une fois le freinage par déformation réalisé, on peut vérifier, à l'aide des moyens de mesure usuels, que le couple de freinage ainsi obtenu se situe à l'intérieur de la plage mini/maxi définie par les spécifications techniques applicables.

## Revendications

1. Procédé de freinage d'un écrou (48) présentant un filetage intérieur, dans lequel :
- on détermine une résistance mécanique à la rupture en traction (Rm) et une limite élastique (Re) du matériau constitutif de l'écrou en fonction de la température,
- on détermine une température optimale (7 ; 12) de chauffage pour laquelle est atteint un maximum d'un intervalle plastique relatif du matériau, ledit intervalle plastique relatif étant défini par la formule (Rm - Re) / Rm,
- on détermine une durée maximale de chauffage au-delà de laquelle l'écrou présente un risque de dégradation de sa microstructure et/ou de sa résistance mécanique initiale,
- on chauffe l'écrou à une température sensiblement égale à ladite température optimale et une durée de chauffage inférieure à ladite durée maximale, de sorte que la microstructure et la résistance mécanique initiales du matériau constitutif de l'écrou soient conservées,
- on déforme localement, par flexion, un corps (47) de l'écrou.

2. Procédé selon la revendication 1, tel qu'on applique à l'écrou une température comprise entre 80% et 120% de la température optimale, les températures étant exprimées en °C.

3. Procédé selon la revendication 1 ou la revendication 2, tel qu'on ne chauffe qu'une partie de l'écrou sur laquelle on applique la déformation.

4. Procédé selon la revendication 3, tel qu'on déforme l'écrou au moyen de pions (49 ; 50 ; 51) de compression appliqués de manière radiale par rapport à un axe de symétrie de l'écrou, et au maximum sur une moitié du corps de l'écrou opposée à une face (61) d'appui dudit écrou.

5. Procédé selon l'une des revendications 1 à 4, **caractérisé en ce qu'**on chauffe l'écrou pendant moins d'une minute.

6. Procédé selon l'une des revendications 1 à 5, tel que le matériau constitutif de l'écrou est choisi parmi un alliage de titane, un alliage de nickel, un alliage de cobalt et un acier à haute résistance à durcissement structural.

7. Procédé selon la revendication 6, tel que le matériau constitutif présente, à température ambiante, un intervalle plastique relatif inférieur à 14% et/ou dont la résistance mécanique est supérieure à 900 MPa.

8. Procédé selon l'une des revendications 6 ou 7, tel que le matériau constitutif de l'écrou est du Ti6Al4V.

9. Procédé selon la revendication 8, tel qu'on chauffe l'écrou à une température comprise entre 300°C et 440°C lorsque le Ti6Al4V est à l'état recuit.

10. Procédé selon la revendication 7, tel qu'on chauffe l'écrou à une température comprise entre 360°C et 540°C lorsque le Ti6Al4V est à l'état trempé - vieilli.

11. Procédé selon l'une des revendications 1 à 9, ne comportant pas d'étape ultérieure de traitement thermique.

## Patentansprüche

1. Sicherungsverfahren einer Mutter (48) mit einem Innengewinde, wobei:
- eine mechanische Reißfestigkeit bei Zugbeanspruchung (Rm) und eine Streckgrenze (Re) des die Mutter bildenden Materials abhängig von der Temperatur bestimmt werden,
- eine optimale Heiztemperatur (7; 12) bestimmt wird, bei der ein Maximum eines relativen Erweichungsbereich des Materials erreicht wird, wobei der relative Erweichungsbereich durch die Formel (Rm - Re) / Rm definiert wird,
- eine maximale Heizdauer bestimmt wird, jenseits der die Mutter eine Gefahr der Verschlechterung ihrer Mikrostruktur und/oder ihrer ursprünglichen mechanischen Festigkeit aufweist,
- die Mutter auf eine Temperatur im Wesentlichen gleich der optimalen Temperatur und über eine Heizdauer geringer als die maximale Dauer erhitzt wird, so dass die ursprüngliche Mikrostruktur und mechanische Festigkeit des Materials der Mutter beibehalten werden,
- ein Körper (47) der Mutter lokal durch Biegung verformt wird.

2. Verfahren nach Anspruch 1, wobei eine Temperatur zwischen 80% und 120% der optimalen Temperatur an die Mutter angewendet wird, wobei die Temperaturen in °C ausgedrückt werden.

3. Verfahren nach Anspruch 1 oder Anspruch 2, wobei nur ein Teil der Mutter erhitzt wird, an den die Verformung angewendet wird.

4. Verfahren nach Anspruch 3, wobei die Mutter mittels Kompressionsstiften (49; 50; 51) verformt wird, die radial bezüglich einer Symmetrieachse der Mutter und maximal auf eine Hälfte des Körpers der Mutter entgegengesetzt zu einer Auflageseite (61) der Mutter angewendet werden.

5. Verfahren nach einem der Ansprüche 1 bis 4, **dadurch gekennzeichnet, dass** die Mutter während weniger als eine Minute erhitzt wird.

6. Verfahren nach einem der Ansprüche 1 bis 5, wobei das die Mutter bildende Material unter einer Titanlegierung, einer Nickellegierung, einer Kobaltlegierung und einem hochfesten Stahl mit strukturelle Härtung ausgewählt wird.

7. Verfahren nach Anspruch 6, wobei das Material bei Umgebungstemperatur einen relativen Erweichungsbereich aufweist, der kleiner als 14% ist und/oder dessen mechanische Festigkeit höher als 900 MPa ist.

8. Verfahren nach einem der Ansprüche 6 oder 7, wobei das die Mutter bildende Material Ti6Al4V ist.

9. Verfahren nach Anspruch 8, wobei die Mutter auf eine Temperatur zwischen 300°C und 440°C erhitzt wird, wenn das Ti6Al4V im geglühten Zustand ist.

10. Verfahren nach Anspruch 7, wobei die Mutter auf eine Temperatur zwischen 360°C und 540°C erhitzt wird, wenn das Ti6Al4V im gehärteten - gealterten Zustand ist.

11. Verfahren nach einem der Ansprüche 1 bis 9, das keinen späteren Schritt der Wärmebehandlung aufweist.

## Claims

1. Method for locking a nut (48) having an internal screw thread, in which method:
- an ultimate tensile strength (Rm) and elastic limit (Re) of the material of which the nut is made are determined as a function of temperature,
- an optimal temperature (7; 12) of heating for which a maximum of a relative plastic range for the material is reached is determined, the said relative plastic range being defined by the formula (Rm - Re)/Rm,
- a maximum duration of heating beyond which the nut carries a risk of its microstructure and/or its initial mechanical strength becoming impaired is determined,
- the nut is heated to a temperature substantially equal to the said optimal temperature with a duration of heating shorter than the said maximum duration so that the initial microstructure and the initial mechanical strength of the material of which the nut is made are maintained,
- a body (47) of the nut is deformed locally in bending.

2. Method according to Claim 1, such that a temperature of between 80% and 120% of the optimal temperature is applied to the nut, the temperatures being expressed in °C.

3. Method according to Claim 1 or Claim 2, such that only a part of the nut to which the deformation is applied is heated.

4. Method according to Claim 3, such that the nut is deformed using compression pins (49; 50; 51) applied radially with respect to an axis of symmetry of the nut, and at most to a half of the body of the nut which is the opposite face to a bearing face (61) of the said nut.

5. Method according to one of Claims 1 to 4, **characterized in that** the nut is heated during less than one minute.

6. Method according to one of Claims 1 to 5, such that the material of which the nut is made is chosen from a titanium alloy, a nickel alloy, a cobalt alloy, and a structural hardened high strength steel.

7. Method according to Claim 6, such that the constituent material has, at ambient temperature, a relative plastic range of less than 14% and/or the mechanical strength of which exceeds 900 MPa.

8. Method according to either of Claims 6 and 7, such that the material of which the nut is made is Ti6Al4V.

9. Method according to Claim 8, such that the nut is heated to a temperature of between 300°C and 440°C when the Ti6Al4V is in the annealed state.

10. Method according to Claim 7, such that the nut is heated to a temperature of between 360°C and 540°C when the Ti6Al4V is in the age-hardened state.

11. Method according to one of Claims 1 to 9 comprising no subsequent heat treatment step.
